Europäisches Patentamt

European Patent Office

Office européen des brevets

(11) Veröffentlichungsnummer: **0 161 598**
**B1**

(12) # EUROPÄISCHE PATENTSCHRIFT

(45) Veröffentlichungstag der Patentschrift:
18.01.89

(51) Int. Cl.⁴: **G 01 S 13/28**

(21) Anmeldenummer: **85105464.3**

(22) Anmeldetag: **04.05.85**

(54) **Radaranordnung.**

(30) Priorität: **09.05.84 DE 3417073**

(43) Veröffentlichungstag der Anmeldung:
**21.11.85 Patentblatt 85/47**

(45) Bekanntmachung des Hinweises auf die Patenterteilung:
**18.01.89 Patentblatt 89/3**

(84) Benannte Vertragsstaaten:
**BE DE FR GB IT NL**

(56) Entgegenhaltungen:
**IEEE TRANSACTIONS ON SONICS AND ULTRASONICS,
Band SU-20, Nr. 2, April 1973, Seiten 94-104, New York,
US; H.M. GERARD u.a.: "The design and applications of
highly dispersive acoustic surface-wave filters"
PROCEEDINGS OF THE IEEE, Band 52, Nr. 4, April 1964,
Seiten 377-389, New York, US; C.E. COOK u.a.: "A pulse
compression predistortion function for efficient
sidelobe reduction in a high-power radar"
IRE TRANSACTIONS ON MILITARY ELECTRONICS,
Band MIL-6, Nr. 2, April 1962, Seiten 162-169, New York,
US; C.L. THEMES: "Sidelobe suppression in a
range-channel pulse-compression radar"**

(73) Patentinhaber: **Licentia Patent-Verwaltungs-GmbH,
Theodor-Stern-Kai 1, D-6000 Frankfurt/Main 70 (DE)**

(72) Erfinder: **Jehle, Franz, Dipl.-Ing.(FH), Fünf Bäume
Weg 148, D-7900 Ulm/Donau (DE)**
Erfinder: **Mutschler, Jürgen, Dr.-Ing.,
Soldatenstrasse 14, D-7900 Ulm/Donau (DE)**

(74) Vertreter: **Schulze, Harald Rudolf, Dipl.-Ing. et al,
Licentia Patent-Verwaltungs-GmbH
Theodor-Stern-Kai 1, D-6000 Frankfurt/Main 70 (DE)**

## Beschreibung

Die Erfindung betrifft eine Radaranordnung der im Oberbegriff des Patentanspruchs 1 angegebenen Art.

Pulskompressionsverfahren sind in der Radartechnik seit längerem bekannt und beispielsweise in «Modern Radar», John Wiley Sons, 1967 ausführlich beschrieben. Die Pulskompression erlaubt eine höhere Entfernungsauflösung als der Länge des Sendepulses entspricht. Die technische Entwicklung geht dabei bevorzugt in Richtung des Einsatzes digitaler Technik, indem der Sendeimpuls in eine Mehrzahl von Subpulsen aufgeteilt wird, die nach einer digitalen Sequenz, z.B. einer Pseudo-Zufalls-Folge, kodiert werden. Durch Pulskompression in einer Matched-Filter-Anordnung im Empfänger wird ein von einem Ziel reflektierter Echoimpuls im wesentlichen in einen gegenüber dem Sende- und dem Echoimpuls sehr kurzen Puls komprimiert. Die Kompression ist i.a. um so besser, je grösser die Anzahl der Subpulse ist. Eine grosse Anzahl von Subpulsen ist aber gleichbedeutend mit einer grossen Sendeimpulsdauer, was den Einsatz dieser Technik zur Messung sehr kurzer Entfernungen, wie z.B. der Bestimmung der Flughöhe bei einem Geländefolgeradar nicht erlaubt.

In der Radartechnik bekannte analoge Pulskompressionsverfahren mit frequenzmoduliertem Sendeimpuls und einem Kompressionsfilter mit frequenzabhängiger Laufzeitverzögerung und Wichtung haben relativ hohe zeitliche Nebenzipfel neben dem Hauptecho des komprimierten Zielechoimpulses. Diese hohen Nebenzipfel werden unter Umständen anstelle des Hauptechos zur Auswertung verwandt, was zu erheblichen Entfernungsmessfehlern und bei Geländefolgeradars damit zu Höhenfehlern des Geländefolgeflugs führt.

Der vorliegenden Erfindung liegt die Aufgabe zugrunde, eine Radaranordnung der im Oberbegriff des Patentanspruchs 1 genannten Art anzugeben, bei welcher die vorstehend genannten Entfernungsfehler nicht auftreten.

Die erfindungsgemässe Lösung dieser Aufgabe ist im Kennzeichen des Patentanspruchs 1 beschrieben. Die Unteransprüche beinhalten vorteilhafte Ausgestaltungen und Weiterbildungen der Erfindung.

Wesentlich bei der vorliegenden Erfindung ist die asymmetrische Ausführung der Wichtungsfunktion des Kompressionsfilters. Die bekannten Pulskompressionsverfahren bei frequenzmodulierten Sendeimpulsen (chirp) arbeiten mit symmetrisch gewichteten Filtern und weisen damit auch symmetrisches Nebenzipfelverhalten des Pulskompressionssignals auf. Durch die Absenkung der zeitlich voreilenden Nebenzipfel (time sidelobes) des Pulskompressionssignals, das durch Kreuzkorrelation mit der Wichtungsfunktion des Kompressionsfilters erzeugt wird, unter gleichzeitiger Inkaufnahme von entsprechend angehobenen zeitlich nacheilenden Nebenzipfeln kann der Nebenzipfelabstand (in dB gemessen) der zeitlich voreilenden Nebenzipfel gegenüber dem Hauptecho wesentlich verbessert werden, ohne dass Nachteile bezüglich des Signal/Rausch-Verhältnisses oder der Breite des komprimierten Impulses entstehen. Die abgesenkten voreilenden Nebenzipfel können durch eine Amplitudenschwelle ohne weiteres abgetrennt werden. An die nacheilenden Nebenzipfel werden bei Anwendung wie z.B. einem Geländefolgeradar, wo die Erkennung des Zieles mit der geringsten Entfernung zur Einhaltung einer optimalen Flughöhe wesentlich ist, keine besonderen Forderungen gestellt. Diese nacheilenden Nebenzipfel können daher ohne Beeinträchtigung der Funktion der Radaranlage die Amplitudenschwelle überschreiten.

Die Aufstellung einer Wichtungsfunktion zur Erzielung eines gewünschten Pulskompressionssignals liegt bei Vorgabe des Zeitverlaufs (abgesenkte voreilende, angehobene nacheilende zeitliche Nebenzipfel) im Bereich fachmännischen Könnens und kann beispielsweise der eingangs angeführten Literatur «Modern Radar» mit darin genannten Referenzen entnommen werden.

Von T.T. Taylor wird in «Design of Line-Source Antennas for Narrow Beamwidth and Low Side Lobes», IRE Transactions an Antennas and Propagation, AP-3, 1955, pp 16–28, ein Approximationsverfahren zur Verwirklichung symetrischer Wichtungsfunktionen ausführlich beschrieben, bei welchem die gewünschte Wichtungsfunktion als Fourierreihe angesetzt wird und die Nullstellen des Pulskompressionssignals symmetrisch zum Hauptwert vorgegeben werden, woraus sich dann die Fourierkoeffizienten ergeben. Dasselbe Verfahren kann für eine asymmetrische Wichtungsfunktion mit gemäss der Erfindung abgesenkten voreilenden zeitlichen Nebenzipfeln angewandt werden, wenn das Ausgangssignal und dessen Nullstellen entsprechend asymmetrisch vorgegeben werden. Setzt man als Wichtungsfunktion des Sendesignals zum Beispiel ein Rechteck mit kosinusförmig gerundeten Kanten und als asymmetrische Wichtungsfunktion der Impulsantwort eine Fourier-Reihe mit noch unbekannten Fourier-Koeffizienten an, so lässt sich das Ausgangssignal durch einen analytischen Ausdruck beschreiben, in dem die Fourierkoeffizienten ausschliesslich linear vorkommen. Die asymmetrische Vorgabe von Nullstellen des Ausgangssignals führt dann auf ein lineares Gleichungssystem, aus dem auf einfache Weise die Fourier-Koeffizienten ermittelt werden können. Damit ist die Wichtungsfunktion des Filters bestimmt.

Das gewichtete Kompressionsfilter ist bevorzugterweise als Oberflächenwellen-Filter mit frequenzabhängiger Laufzeitvergrösserung ausgeführt.

Als Frequenzmodulation des Sendepulses wird eine zeitlineare Frequenzänderung bevorzugt, da hierbei Dopplerfrequenzverschiebungen einen wesentlich geringeren Einfluss auf das Pulskompressionssignal haben als bei nichtlinearer Frequenzänderung.

Der Sendeimpuls hat als Einhüllende vorzugsweise Rechteckform, wobei es gemäss einer vorteilhaften Weiterbildung günstig ist, den Anstieg und Abfall des Pulses cosinusförmig abzurunden.

Die Abbildungen zeigen in vereinfachter Form den Verlauf der Wichtungsfunktion $\omega(t)$ und des Pulskompressionssignals PKS(t) über der auf die Pulsbreite normierten Zeit zum einen für aus dem Stand der Technik bekannte Pulskompressionsanordnungen (Fig. 1 und 2) und zum andern für ein Ausführungsbeispiel der vorliegenden Erfindung (Fig. 3 und 4), jeweils unter der Annahme eines rechteckförmigen Sendeimpulses mit linearer Frequenzmodulation.

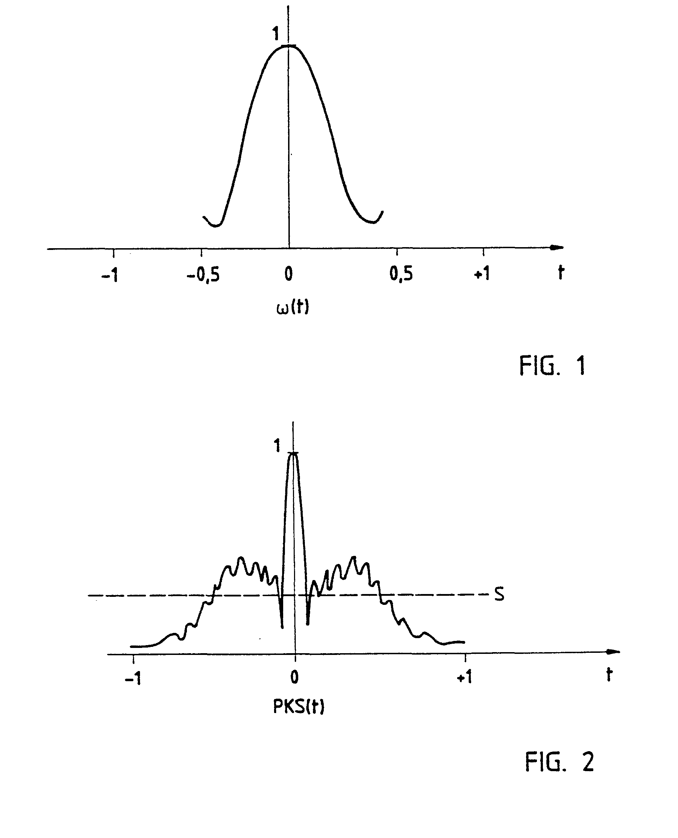

Die Filterung eines rechteckigen Echoimpulses mit einem Kompressionsfilter, das die in Fig. 1 dargestellte symmetrische Wichtungsfunktion aufweist, ergibt ein Pulskompressionssignal PKS nach Fig. 2, das symmetrische zeitliche Nebenzipfel aufweist, deren Amplitude die Amplitudenschwelle S übersteigt, so dass für die Ermittlung der geringsten Zielenfernung nicht das Hauptecho, sondern die diesem zeitlich voreilenden Nebenzipfel verwandt werden.

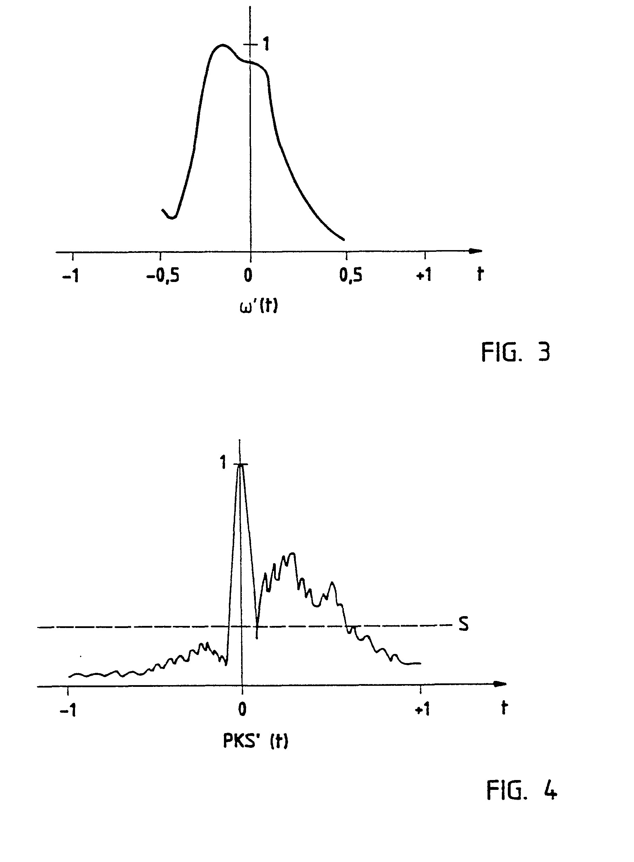

Bei dem in Fig. 3 gezeigten Beispiel der Wichtungsfunktion $\omega'(t)$ eines Kompressionsfilters wird gezielt von der symmetrischen Ausführung abgewichen, um bei der Kompression eines rechteckförmigen Impulses ein zeitlich asymmetrisches Pulskompressionssignal PKS' der in Fig. 4 skizzierten Art zu erhalten. Dieses PKS' zeigt wie das symmetrische PKS ein schmales Hauptecho, die zeitlich voreilenden Nebenzipfel sind aber stark abgesenkt und die auf die Nebenzipfel entfallenden Energieanteile sind überwiegend in die dadurch angehobenen nacheilenden Nebenzipfel verlagert. Die voreilenden Nebenzipfel liegen deutlich unterhalb der Amplitudenschwelle S, so dass zur Bestimmung des Ziels mit der geringsten Entfernung das scharf gebündelte Hauptecho verwandt wird. Die relativ hohe Amplitude der zeitlich nacheilenden Nebenzipfel ist für die Bestimmung des nächstgelegenen Ziels nicht störend.

Die Erfindung findet besonders vorteilhaft Einsatz in Geländefolgeradars, wo neben den beschriebenen Vorteilen sich noch weitere dadurch ergeben, dass bei dem Pulskompressionsverfahren die Spitzensendeleistung wesentlich verringert und dadurch die Entdeckbarkeit durch Radarwarnempfänger herabgesetzt ist. Durch die Frequenzmodulation und nachfolgende Pulskompression ist die Radarauflösungszelle in Entfernungsrichtung reduziert und gleichzeitig die Störanfälligkeit gegen beabsichtigte Störungen verringert.

## Patentansprüche

1. Radaranordnung, insbesondere für Geländefolgeradar, mit Einrichtungen zur Aussendung von frequenzmodulierten Sendeimpulsen und zur Impulskompression von Echoimpulsen durch Kreuzkorrelation der Empfangssignale mit der Gewichtsfunktion eines Kompressionsfilters, dadurch gekennzeichnet, dass die Gewichtsfunktion des Kompressionsfilters asymmetrisch ist der Art, dass die zeitlich voreilenden Nebenzipfel der Kreuzkorrelationsfunktion (PKS) abgesenkt und die nacheilenden Nebenzipfel angehoben werden.

2. Radaranordnung nach Anspruch 1, dadurch gekennzeichnet, dass das Kompressionsfilter ein Oberflächenwellenfilter ist.

3. Radaranordnung nach Anspruch 1 oder 2, gekennzeichnet durch lineare Frequenzmodulation des Sendeimpulses.

4. Radaranordnung nach einem der Ansprüche 1 bis 3, dadurch gekennzeichnet, dass der Sendeimpuls rechteckförmig ist.

5. Radaranordnung nach Anspruch 4, dadurch gekennzeichnet, dass die Flanken des Sendeimpulses cosinusförmig gerundet sind.

## Claims

1. Radar system, in particular for ground-tracking radar, with equipment for the emission of frequency-modulated transmitted pulses and for the pulse compression of echo pulses by cross-correlation of the received signals with the weighting function of a compression filter, characterised thereby, that the weighting function of the compression filter is asymmetrical in the manner that the side lobes leading in time of the cross-correlation function (PSK) are lowered and the trailing side lobes are raised.

2. Radar system according to claim 1, characterised thereby, that the compression filter is a surface wave filter.

3. Radar system according to claim 1 or 2, characterised by linear frequency modulation of the transmitted pulse.

4. Radar system according to one of the claims 1 to 3, characterised thereby, that the transmitted pulse is rectangular.

5. Radar system according to claim 4, characterised thereby, that the flanks of the transmitted pulse are rounded off cosinusoidally.

## Revendications

1. Dispositif radar, en particulier pour radar de poursuite du sol, comportant des dispositifs pour l'émission d'impulsions d'émission modulées en fréquence et pour la compression des impulsions d'écho par corrélation mutuelle des signaux reçus avec la fonction de pondération d'un filtre de compression, caractérisé en ce que la fonction de compression du filtre de compression est asymétrique en ce sens que l'on abaisse les lobes secondaires de la fonction de corrélation mutuelle (PSK) qui sont en avance dans le temps et que l'on relève les lobes secondaires qui sont en retard dans le temps.

2. Dispositif radar selon la revendication 1, caractérisé en ce que le filtre de compression est un filtre d'ondes de surface.

3. Dispositif radar selon la revendication 1 ou 2, caractérisé par une modulation linéaire en fréquence de l'impulsion d'émission.

4. Dispositif radar selon l'une des revendications 1 à 3, caractérisé en ce que l'impulsion d'émission est de forme rectangulaire.

5. Dispositif radar selon la revendication 4, caractérisé en ce que les flancs de l'impulsion d'émission sont arrondis sous forme cosinusoïdale.

4

ω(t)

FIG. 1

PKS(t)

FIG. 2

ω'(t)

FIG. 3

PKS' (t)

FIG. 4